# EUROPEAN PATENT SPECIFICATION

(11) **EP 4 112 488 B1**
(45) Date of publication and mention of the grant of the patent: **03.12.2025**
(21) Application number: 22382605.8
(22) Date of filing: 28.06.2022
(51) Int. Cl.: B65D 5/18, B65D 5/36

(54) **CARDBOARD CONTAINER**
PAPPBEHÄLTER
RÉCIPIENT EN CARTON

(30) Priority: 29.06.2021 ES 202130607
(43) Date of publication of application: 04.01.2023
(73) Proprietor: Ulzama Packaging, S.L., 31620 Huarte (Navarra) (ES)
(72) Inventor: OTEIZA ECHEVERRIA, Jose Ignacio, 31620 Huarte (NAVARRA) (ES); ALVAREZ FORMIGO, Ricardo, 31620 Huarte (NAVARRA) (ES); ASTUDILLO LAPEÑA, Pablo Jose, 31620 Huarte (NAVARRA) (ES)
(74) Representative: Plasseraud IP

(56) References cited:
- DE-A1- 1 586 654
- FR-A1- 2 290 358
- GB-A- 608 406
- US-A- 2 907 510
- US-A1- 2020 047 940

## Description

### Technical field

The present invention is related to the packaging of products for marketing in tub-type containers, proposing a container made of cardboard, with features that facilitate constructive formation, as well as storage and transport before use, enabling a simple assembly in the place where the use is required.

### State of the art

In today's trade, many products, mainly food, are marketed in containers, plastic containers traditionally being used, which are light and cheap, but with the drawback that they have poor biodegradability qualities, meaning it is of interest to replace plastic containers with containers made of biodegradable materials that make it possible to meet the objective of reducing industrial plastic consumption.

To do so, an alternative to plastic containers is the use of cardboard, since optimal qualities are obtained with this material for the degradation and recyclability of the containers that are discarded after use.

In this sense, a variety of containers made with cardboard have been developed, but in general, existing containers of this type have the drawback that when they are assembled they occupy a large volume, meaning that storage and transport are expensive and, in addition, the containers are not practical under these conditions for harvesters of products such as strawberries, since the containers to be used must be carried by the harvesters themselves, which is notoriously difficult.

It is also possible to store and transport the disassembled cardboard containers, in a flat arrangement that occupies little space, but then it is necessary to assemble the containers at the place of use, which entails additional work and a loss of time for harvesters, in addition to the fact that on many occasions assembly is difficult or requires the use of tools.

Moreover, cardboard containers with simple assemblies usually lack suitable mechanical performance for the safety of the products that are packaged therein.

Examples of background art can be found in US 2020/047940 A1, and GB 608406 A.

### Object of the invention

In accordance with the present invention, a container is proposed according to claim 1, that is formed from a cardboard sheet, with a development that enables a simple construction assembly of the container and a good mechanical resistance in the assembled formation, the container being able to be folded, partially built, to a flat arrangement that also facilitates the storage and transport thereof.

This container object of the invention consists of a single die-cut cardboard sheet according to the configuration of the container to be obtained, predetermined fold lines having been made on said cardboard sheet that define the component sections for forming the body of the container.

The die-cut cardboard sheet to form the container comprises a first rectangular section provided with a central opening that leaves a perimeter frame in the contour, wings coming out of two opposite lateral edges of said opening that cover the surface of the opening in a complementary manner (although they can be smaller and not cover the opening), while the perimeter frame extends externally from one side perpendicular to said lateral edges with a gluing strip, which in turn extends on the other side with three successive sections that end in another gluing strip, respective predetermined fold lines being defined between the different portions. Two of the successive sections being those corresponding to the lateral walls of a prismatic body and another section corresponding to the bottom of said prismatic body.

A laminar set thus results that can be folded to form the prismatic body with the three successive sections, which is secured by gluing the gluing strips on the lower face of two of the opposite side members of the frame of the first rectangular section, while the wings of the central opening of said first rectangular section can be folded downwards to close the sides of the prismatic body. In this way, flat walls are obtained for the container that enable the incorporation of advertising inscriptions or those related to the product that is housed.

Said wings have a configuration in correspondence with the lateral sections so that in the assembled position of the container they adjust to the lateral sections to close the prismatic body without clearances. In addition, this configuration enables that only by applying force to the wings to move them downwards, they exert force on the lateral sections causing them to fold down to the assembly position.

Additionally, one of the lateral sections comprises a fold that allows the folding of the lateral section to obtain the flat configuration when the wings are not folded.

This fold allows both the transport of the box in a flat configuration to its place of use and the possibility of transporting it for handling thereof by a second folding and gluing machine that completes the assembly.

To block assembly, the wings of the central opening of the first rectangular section have flanges in the middle area and in the area of the corners of the end edge, which fit into corresponding slots defined in the three successive sections that determine the prismatic body, thus establishing a fastening that ensures the assembly of the container with mechanical strength for use.

Therefore, a container is obtained that has good biodegradability qualities, since the construction material thereof is cardboard, the constructive set of the container being able to be folded to a totally flat shape in a partial construction arrangement, after joining the portions that are secured by gluing, which favours the storage and transport of multiple stacked containers, the constructive assembly of the container in the place of use being very simple and without the need for tools, since it only requires an unfolding movement of the prismatic body and the wings of the central opening of the first rectangular section collapsing until the fitting position in the three successive sections that determine the prismatic body.

The set of three successive sections that determine the prismatic body is provided with a narrowing between the sides towards the central section, whereby the prismatic body of the container is obtained with a frusto-pyramidal shape that, in turn, favours the stacking of assembled containers.

In an alternative configuration, the flanges do not fit into slots, but rather are glued onto the central section of the three successive sections that determine the prismatic body.

Optionally, the wings may have their sides folded, so that in the assembly arrangement they rest on the lateral sections of the three successive sections that determine the prismatic body, being able to be glued onto them and thus providing the set with greater robustness and a better sealing of the container edges.

Additionally, the container can incorporate, in correspondence with the gluing strips for gluing to the upper frame, a transverse elongation of said gluing strips, extending in assembly configuration below the perimeter frame and joining by gluing thereto, achieving, in addition to equipping the frame with greater robustness, that the thickness thereof is the same throughout its perimeter, which is beneficial to facilitate the handling of the containers by machinery.

When the thickness of the frame is different on some sides than others, it is more difficult to calibrate the machines that must handle the containers and there are more errors, so it is advantageous to incorporate this feature that allows the thickness of the frame to be levelled throughout the entire perimeter thereof.

Alternatively, the totally flat shape in partial construction arrangement is also required in the event that the gluing process of the rest of the portions is automated, since it is advantageous to feed the folding machine in an agile way and to be able to reach a high assembly speed.

In the stacking of assembled containers, there may be a certain vacuum effect between them that makes the extraction thereof difficult and to avoid this, holes are provided in each one of the internal corners of the container that allow the passage of air and facilitate the separation of the containers, these holes being generated by the superimposition of the slots that are created at the ends of the two gluing lines that separate the three successive sections that determine the prismatic body and in the cut-outs that are made for this purpose in the corners of the wings.

Therefore, the container object of the invention has very advantageous features for the application for which it is intended, acquiring a life of its own and a preferential character with respect to the conventional containers currently used for the same application.

### Description of the figures

Figure 1 shows a flat view of the die-cut cardboard sheet that is used to build the container object of the invention before gluing.
Figure 2 is a perspective view of the first construction phase of the container with the die-cut cardboard sheet without the folded wings.
Figure 3 is a perspective view of the flat folding position of the container once the folding strips have been glued.
Figure 4 is a perspective view of the container object of the invention in the assembled position.
Figures 5, 6 and 7 are three corresponding lower plan, front elevation and side elevation views of the container object of the invention where the beginning of folding along the fold comprised in one of the lateral sections to fold the container to the flat arrangement can be seen.

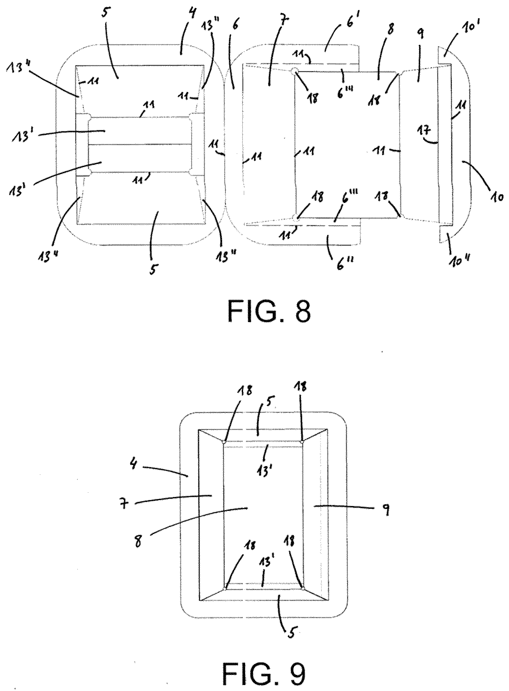

Figure 8 shows a flat view of the die-cut cardboard sheet that is used to build the container object of the invention before gluing according to an alternative embodiment.
Figure 9 is a top plan view of the container object of the invention already assembled according to the alternative embodiment.

### Detailed description of the invention

The object of the invention relates to a container to house products for marketing, fundamentally, but without limitation, of a food type, with an embodiment that is obtained from a single die-cut cardboard sheet (1) according to the configuration of the container to be formed.

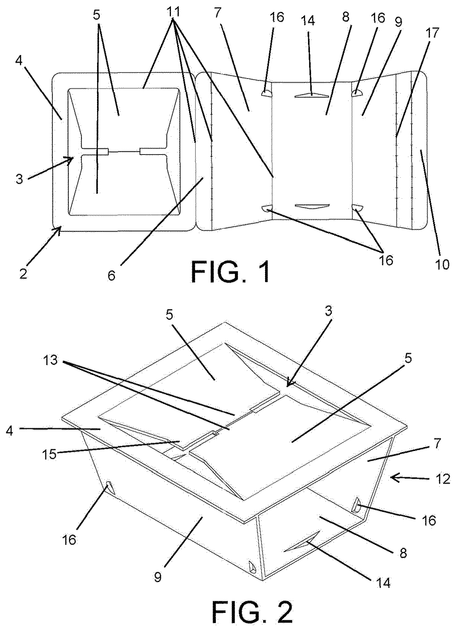

To do this, as Figure 1 shows, the die-cut cardboard sheet (1) for forming the container comprises a first rectangular section (2), which has a central opening (3) also rectangular in section, defining a perimeter area by way of a frame (4), wings (5) coming out of two lateral edges of said central opening (3), wings which are symmetrical to each other, between which they practically cover the entire space of said central opening (3).

On the outside, the aforementioned first rectangular section (2) extends from one side perpendicular to said lateral edges of the central opening (3), with a gluing strip (6), which in turn extends on the other side with three successive sections (7), (8) and (9), the set of which ends at the end with another gluing strip (10).

All the adjacent portions in the composition of the cardboard sheet (1), as described, are joined together by means of predetermined fold lines (11), so that to assemble the container it is only necessary to fold the composition by said fold lines (11), in order to arrange the different portions in the correlative arrangement between them to configure the body of the container.

In this sense, the first operation for assembling the container consists of folding the set of successive sections (7), (8) and (9), to determine a prismatic body (12) with them, which collapses on the lower face of the first rectangular section (2), the gluing strips (6) and (10) being secured by gluing onto two opposite side members of the frame (4) defined around the central opening (3) of said first rectangular section (2), as seen in Figure 2, the sections (7) and (9) configuring two lateral walls of equal dimensions and configuration and the bottom section (8) of the prismatic body (12).

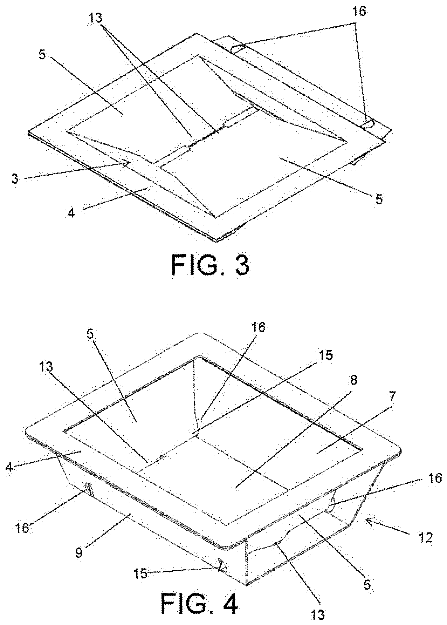

With the prismatic body (12) folded in partial assembly, the completion of the assembly of the container only requires collapsing the wings (5) of the first rectangular section (2) downwards, until said wings (5) are positioned as the remaining lateral walls of the prismatic body (12), as seen in figure 4, whereby the container is assembled ready for use. The configuration of the wings (5) in correspondence with the lateral sections (7, 9) makes assembly easier by simply collapsing down the wings (5) that press on the lateral sections (7, 9) folding the container down to the assembled position.

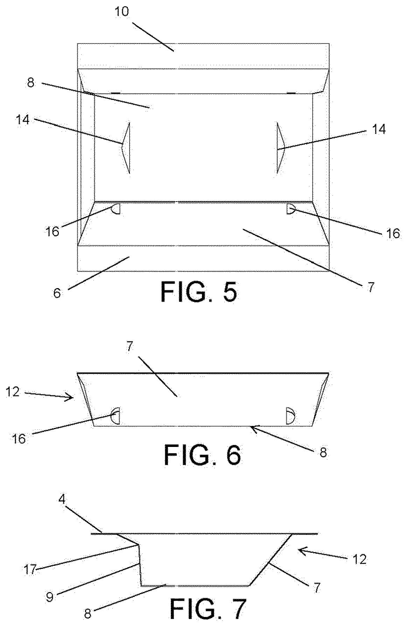

Once this is done, returning the wings (5) to the initial unfolded position thereof, the partially assembled container can be folded to a flat arrangement, as shown in figure 3, thus occupying a very reduced space in height that facilitates the storage and transport of multiple containers stacked to take them, for example, to the places of use, such as the fruit-harvesting fields for which the containers are intended, where the fruit-harvesting operators can unfold the prismatic body (12) of the configuration of the container to finish the assembly themselves. To carry out this folding to a flat arrangement, the cardboard container, as can be seen in figures 5, 6 and 7 (corresponding to the initial phase of folding to the flat arrangement), comprises in one of its sections (7) and (9) a fold (17) that enables the folding of said section to reach the mentioned flat arrangement.

To ensure the assembly and strength of the container when used to house the products for which its application is intended, the wings (5) have a flange (13) in the middle area of the end edge thereof that fits into a slot (14) of the section (8) that acts as the bottom of the prismatic body (12), while the end angular areas of the same end edge of the wings (5) in turn determine flanges (15) that fit into respective slots (16) of the sections (7) and (9) that act as lateral walls on the sides of the prismatic body (12), whereby the set of the assembled container has a retention that ensures the rigidity thereof, without requiring tools to complete the assembly.

The successive sections (7), (8) and (9) that determine the prismatic body (12) in the configuration of the container are provided with a narrowing in width towards the intermediate section (8) that acts as the bottom of the body of the container, whereby the prismatic body (12) has a frusto-pyramidal configuration, which in turn favours the stacking of assembled containers, by fitting one into another, occupying a reduced space.

For application to containers for wet products or with liquids, the cardboard sheet (1) intended to form the container can incorporate a plastic coating that makes it waterproof, which does not alter the concept of the invention, since, although a certain proportion of plastic is used, the material for forming the container has good biodegradability qualities, given that, in any case, the construction material is mostly cardboard.

Alternatively, the sections (7) and (9) lack the slots (16), the wings (5) lack the flanges (15) and, instead, flanges (13'), which may be the flanges (13), are glued onto the central section (8), which also lacks the slot (14).

Optionally, each one of the wings (5) has at least one fold that starts from one of the intersection vertexes with the lateral edges of the frame (4) towards the end of each wing (5) coinciding with the central opening (3) such that when the container is assembled, the external sections of the wings (5) form flanges (13") limited by said folds and the lateral end of the wings (5) rests on the lateral sections (7,9) to be glued onto the same.

According to the invention the container has, in at least one end of at least one of the fold lines (11) between the sections (7), (8) and (9) an air passage hole (18), formed by a sheet cut-out, preferably, in correspondence with at least one corner of the bottom of the assembled container. These air passage holes (18), which can be arranged at any other point of the section (8) by way of a bottom, facilitate the stacking and removal of containers by allowing air to pass therethrough between stacked containers.

Optionally, flaps (6'), (6"), (10'), (10") are cut from the same cardboard sheet (1) starting from the gluing strips (6) and/or (10) in a direction perpendicular thereto and that extend towards the opposite gluing strip (6), (10), such that once the container is assembled they are joined by gluing to the lower face of the frame (4). In this way, under this frame (4), another lower frame is generated, formed by the gluing strips (6), (10) and the flaps (6'), (6"), (10'), (10") such that the entire perimeter shape has the same thickness, thus facilitating the handling of the container and the subsequent gluing of the plastic coating or film on the frame (4) to seal the container.

Between the flaps (6'), (6"), (10'), (10") and the sections (7), (8) and (9) there is a residual section (6‴) that can indistinctly be cut out and removed or folded with respect to the flange (6'), (6") and be glued to the external face of the wings (5) of the container.

## Claims

1. A cardboard container, formed from a die-cut cardboard sheet (1) according to the shapes of the container to be built, including predetermined fold lines (11) between the different portions of the formation of the container to be obtained, wherein the die-cut cardboard sheet (1) comprises a rectangular section (2) provided with a central opening (3) defining a perimeter area by way of a frame (4), wings (5) coming out of two opposite lateral edges of that central opening (3), while the aforementioned rectangular section (2) extends externally from a side perpendicular to said edges, with a gluing strip (6), which in turn extends on the other side with three successive sections (7), (8) and (9), the set of which ends at the end with another gluing strip (10), to form, by folding the set of the three successive sections (7), (8) and (9), a prismatic body (12) with two lateral sections (7, 9) and a section (8) by way of a bottom, said prismatic body (12) being secured by gluing the gluing strips (6) and (10) on two opposite side members of the frame (4), said prismatic body (12) being closed on the sides by the wings (5) collapsing downwards to form the container, **characterised in that** one of the lateral sections (7, 9) comprises a fold (17) that enables the lateral section (7, 9) to be folded to obtain a flat configuration when the wings (5) are unfolded, and **in that** the section (8) by way of a bottom comprises at least one air passage hole (18).

2. The cardboard container, according to claim 1, **characterised in that** the wings (5) have fitting flanges (13) and (15) on the end edge, which fit into corresponding slots (14) and (16) defined in the successive sections (7), (8) and (9), establishing a retention of the formation of the assembled container.

3. The cardboard container, according to any one of the preceding claims, **characterised in that** the set of successive sections (7), (8), (9) narrows in width towards the intermediate section (8), determining a prismatic body (12) with a frusto-pyramidal configuration in the assembly of the container.

4. The cardboard container, according to any one of the preceding claims, **characterised in that** the wings (5) have a gluing flange (13'), (13") on one end edge and/or on one lateral edge, which folds by means of a fold line (11) with respect to said wings (5) to rest on, respectively, the section (8) by way of a bottom, and/or the lateral section (7) or (9), and to be secured by gluing thereto.

5. The cardboard container, according to any one of the preceding claims, **characterised in that** from the ends of at least one of the gluing strips (6) and/or (10), perpendicularly thereto and towards the opposite gluing strip (6) or (10) respective flaps (6'), (6"), and/or (10'), (10") extend, which fold together with the gluing strip (6) and/or (10) to rest on respective side members perpendicular to said opposite side members of the frame (4).

## Patentansprüche

1. Kartonbehälter, welcher gemäß den Formen des herzustellenden Behälters aus einem gestanzten Kartonbogen (1) gebildet ist, umfassend vorbestimmte Faltlinien (11) zwischen den verschiedenen Abschnitten der Anordnung des herzustellenden Behälters, wobei der gestanzte Kartonbogen (1) einen rechteckigen Bereich (2), welcher mit einer zentralen Öffnung (3) bereitgestellt ist, welche durch einen Rahmen (4) eine Umfangsfläche definiert, und Flügel (5) umfasst, welche aus zwei entgegengesetzten lateralen Rändern der zentralen Öffnung (3) hervorkommen, während sich der zuvor genannte rechteckige Bereich (2) extern von einer Seite erstreckt, welche senkrecht zu den Rändern ist, mit einem Klebstreifen (6), welcher sich wiederum an der anderen Seite mit drei aufeinanderfolgenden Bereichen (7), (8) und (9) erstreckt, wobei die Gruppe davon an dem Ende mit einem weiteren Klebstreifen (10) endet, um durch ein Falten der Gruppe der drei aufeinanderfolgenden Bereiche (7), (8) und (9) einen prismatischen Körper (12) mit zwei lateralen Bereichen (7, 9) und einem Bereich (8) durch einen Boden zu bilden, wobei der prismatische Körper (12) durch ein Kleben der Klebstreifen (6) und (10) an zwei entgegengesetzten Seitenelementen des Rahmens (4) gesichert ist, wobei der prismatische Körper (12) an den Seiten durch die Flügel (5) geschlossen ist, welche nach unten zusammenfallen, um den Behälter zu bilden,
**dadurch gekennzeichnet, dass** einer der lateralen Bereiche (7, 9) einen Falz (17) umfasst, welcher es dem lateralen Bereich (7, 9) ermöglicht, gefaltet zu werden, um eine flache Konfiguration zu erhalten, wenn die Flügel (5) entfaltet sind, und dadurch, dass der Bereich (8) durch einen Boden wenigstens ein Luftdurchlassloch (18) umfasst.

2. Kartonbehälter nach Anspruch 1, **dadurch gekennzeichnet, dass** die Flügel (5) Passflansche (13) und (15) an dem Endrand aufweisen, welche in entsprechende Schlitze (14) und (16) passen, welche in den aufeinanderfolgenden Bereichen (7), (8) und (9) definiert sind, um ein Zurückhalten der Anordnung des zusammengefügten Behälters zu begründen.

3. Kartonbehälter nach einem der vorhergehenden Ansprüche, **dadurch gekennzeichnet, dass** sich die Gruppe aufeinanderfolgender Bereiche (7), (8) und (9) in der Breite in Richtung des Zwischenbereichs (8) verengt, um bei dem Zusammenfügen des Behälters einen prismatischen Körper (12) mit einer pyramidenstumpfförmigen Konfiguration zu bestimmen.

4. Kartonbehälter nach einem der vorhergehenden Ansprüche, **dadurch gekennzeichnet, dass** die Flügel (5) an einem Endrand und/oder an einem lateralen Rand einen Klebflansch (13'), (13") aufweisen, welcher mittels einer Faltlinie (11) in Bezug auf die Flügel (5), um darauf zu liegen, bzw. den Bereich (8) durch einen Boden und/oder den lateralen Bereich (7) oder (9) faltet und um durch Kleben daran gesichert zu sein.

5. Kartonbehälter nach einem der vorhergehenden Ansprüche, **dadurch gekennzeichnet, dass** sich von den Enden wenigstens eines der Klebstreifen (6) und/oder (10) senkrecht dazu und in Richtung des entgegengesetzten Klebstreifens (6) oder (10) jeweilige Laschen (6'), (6") und/oder (10'), (10") erstrecken, welche zusammen mit dem Klebstreifen (6) und/oder (10) falten, um an jeweiligen Seitenelementen zu liegen, welche senkrecht zu den entgegengesetzten Seitenelementen des Rahmens (4) sind.

## Revendications

1. Récipient en carton, formé à partir d'une feuille de carton découpée (1) selon les formes du récipient à réaliser, comportant des lignes de pliage (11) prédéterminées entre les différentes parties de la formation du récipient à obtenir, dans lequel la feuille de carton découpée (1) comprend une section rectangulaire (2) dotée d'une ouverture centrale (3) définissant une zone périmétrique servant de cadre (4), des ailes (5) sortant de deux bords latéraux opposés de cette ouverture centrale (3), tandis que la section rectangulaire (2) susmentionnée s'étend à l'extérieur à partir d'un côté perpendiculaire auxdits bords, avec une bande de collage (6), qui s'étend à son tour de l'autre côté avec trois sections successives (7), (8) et (9), dont l'ensemble se termine à l'extrémité par une autre bande de collage (10), pour former, par pliage de l'ensemble des trois sections successives (7), (8) et (9), un corps prismatique (12) avec deux sections latérales (7, 9) et une section (8) servant de fond, ledit corps prismatique (12) étant fixé par collage des bandes de collage (6) et (10) sur deux éléments latéraux opposés du cadre (4), ledit corps prismatique (12) étant fermé sur les côtés par les ailes (5) se repliant vers le bas pour former le récipient, **caractérisé en ce que** l'une des sections latérales (7, 9) comprend un pli (17) qui permet de plier la section latérale (7, 9) pour obtenir une configuration plate lorsque les ailes (5) sont dépliées, et **en ce que** la section (8) servant de fond comprend au moins un trou de passage d'air (18).

2. Récipient en carton, selon la revendication 1, **caractérisé en ce que** les ailes (5) présentent des brides d'ajustement (13) et (15) sur le bord d'extrémité, qui s'ajustent dans des fentes correspondantes (14) et (16) définies dans les sections successives (7), (8) et (9), établissant une retenue de la formation du récipient assemblé.

3. Récipient en carton, selon l'une quelconque des revendications précédentes, **caractérisé en ce que** la largeur de l'ensemble des sections successives (7), (8), (9) rétrécit vers la section intermédiaire (8), déterminant un corps prismatique (12) avec une configuration de pyramide tronquée lors de l'assemblage du récipient.

4. Récipient en carton, selon l'une quelconque des revendications précédentes, **caractérisé en ce que** les ailes (5) présentent une bride de collage (13'), (13") sur un bord d'extrémité et/ou sur un bord latéral, qui se plie au moyen d'une ligne de pliage (11) par rapport auxdites ailes (5) pour reposer respectivement sur la section (8) servant de fond et/ou la section latérale (7) ou (9), et pour y être fixée par collage.

5. Récipient en carton, selon l'une quelconque des revendications précédentes, **caractérisé en ce qu'**à partir des extrémités d'au moins une des bandes de collage (6) et/ou (10), perpendiculairement à celles-ci et vers la bande de collage (6) ou (10) opposée, s'étendent des rabats (6'), (6") et/ou (10'), (10") respectifs qui se plient conjointement avec la bande de collage (6) et/ou (10) pour reposer sur des éléments latéraux respectifs perpendiculaires auxdits éléments latéraux opposés du cadre (4).
